(19) **Europäisches Patentamt**
**European Patent Office**
**Office européen des brevets**

(11) **EP 2 297 477 B1**

(12) **EUROPÄISCHE PATENTSCHRIFT**

(45) Veröffentlichungstag und Bekanntmachung des Hinweises auf die Patenterteilung:
**28.03.2012 Patentblatt 2012/13**

(21) Anmeldenummer: **09772173.2**

(22) Anmeldetag: **02.07.2009**

(51) Int Cl.:
***F16D 65/18*** *(2006.01)* ***B60T 17/08*** *(2006.01)*

(86) Internationale Anmeldenummer:
**PCT/EP2009/004787**

(87) Internationale Veröffentlichungsnummer:
**WO 2010/000473 (07.01.2010 Gazette 2010/01)**

(54) **PNEUMATISCH BETÄTIGBARE SCHEIBENBREMSE SOWIE BREMSZYLINDER**

PNEUMATICALLY ACTUATABLE DISK BRAKE AND BRAKE CYLINDER

FREIN À DISQUE À ACTIONNEMENT PNEUMATIQUE ET CYLINDRE DE FREIN

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**

(30) Priorität: **04.07.2008 DE 102008031443**

(43) Veröffentlichungstag der Anmeldung:
**23.03.2011 Patentblatt 2011/12**

(73) Patentinhaber: **KNORR-BREMSE Systeme für Nutzfahrzeuge GmbH**
**80809 München (DE)**

(72) Erfinder:
• **BAUMGARTNER, Johann**
**85368 Moosburg (DE)**
• **GRUBER, Robert**
**83539 Pfaffing (DE)**

• **PERICEVIC, Aleksandar**
**80636 München (DE)**
• **GEISSLER, Steffen**
**63110 Rodgau (DE)**
• **TRIMPE, Robert**
**82234 Wessling (DE)**

(74) Vertreter: **Mattusch, Gundula**
**Knorr-Bremse AG,**
**Patentabteilung V/RG**
**Moosacher Strasse 80**
**80809 München (DE)**

(56) Entgegenhaltungen:
EP-B- 0 743 469    WO-A-98/26968
WO-A-2007/082658    DE-A1- 19 935 629
US-A1- 2004 250 679    US-A1- 2009 159 383

**Beschreibung**

Die Erfindung betrifft eine pneumatisch betätigbare Scheibenbremse gemäß dem Oberbegriff des Anspruchs 1 sowie einen mit Druckluft beaufschlagbaren Bremszylinder nach Anspruch 12.

Eine solche pneumatisch betätigbare Scheibenbremse ist beispielsweise aus der EP 0 743 469 B 1 bekannt.

Dabei ist der Bremszylinder mittels Schraubbolzen direkt an einem Flansch des Bremssattels befestigt, wobei durch die Schraubbolzen die Position des Bremszylinders an der Bremse und damit auch die Lage der Druckluftanschlüsse bestimmt wird, wodurch sich bei unterschiedlichen Einbauverhältnissen Einbauvarianten der Zylinder ergeben.

Zur Bereitstellung eines entsprechend hohen Luftdrucks zur Betätigung des Bremshebels ist eine entsprechende Dimensionierung des Bremszylinders erforderlich, durch die sich eine ganze Reihe von Nachteilen ergibt.

Aufgrund der im Fahrbetrieb auftretenden Erschütterungen bzw. Vibrationen, müssen die Schraubverbindungen zwischen dem Bremszylinder und dem Bremssattel ebenso massiv ausgeführt sein, wie ein Bremszylinder-Deckel, durch den die Befestigungsschrauben geführt sind und an dessen Innenwandung sich im Übrigen die Rückstellfeder abstützt.

Dabei liegt der Bremszylinder-Schwerpunkt relativ weit ab vom Anschlussbereich mit dem Bremssattel, wodurch ein entsprechend hohes Biegemoment auf die Befestigungsschrauben wirkt, das eine daran angepasste Auslegung der Schrauben erfordert.

Darüber hinaus steht die funktionsbedingt relativ große Baulänge des Bremszylinders den Forderungen nach einer Baumaß- und gleichermaßen Gewichtsoptimierung entgegen.

Der Stößel des Bremszylinders durchdringt eine im Flansch des Bremssattels vorhandene Öffnung, die gegenüber einem Sekundärraum des Bremszylinders durch einen den Stößel insoweit umschließenden Faltenbalg abgedichtet ist.

Entsprechend dem Hub des Stößels ergibt sich durch das Zusammendrücken bzw. Auseinanderziehen des Faltenbalgs ein Verdrängungsvolumen, das in dem hermetisch abgedichteten Bremssattel Druckänderungen hervorruft. Bei einer Vollbremsung kann dadurch ein Überdruck von bis zu 0,4 bar im Bremssattel entstehen. Dieses Problem ist erfindungsgemäß lösbar, was weiter unten näher anhand eines Beispiels betrachtet wird.

Insbesondere bei einer Undichtigkeit zur Umgebung hin entweicht in einer solchen Überdruckphase Luft nach außen, so dass sich beim Zurückfahren des Bremszylinders nach einer Bremsbetätigung ein Unterdruck einstellt.

Ein vergleichbarer Effekt wird auch durch Temperaturschwankungen hervorgerufen, denen eine Bremse naturgemäß in starkem Maße ausgesetzt ist. Dabei dehnt sich die Luft im Bremssattel bei Erwärmung aus, während sie sich bei Abkühlung zusammenzieht.

Da die vorzugsweise in Nutzfahrzeugen eingesetzten Scheibenbremsen häufig in witterungsbedingt feuchter bzw. nasser Umgebung betrieben werden, wird bei Vorliegen der genannten Undichtigkeit bei Unterdruck Wasser in den Bremseninnenraum eingesaugt, was beispielsweise zu Korrosionen mechanischer Bauteile führen kann, mit der Gefahr eines vollständigen Ausfalls der Bremse.

Aufgrund der genannten großen auszuführenden Betätigungshübe ergibt sich eine weit vom Bremssattel abstehende labile Dichtungsanordnung, die für die Handhabung und den Transport der Scheibenbremsteile vor einem Einbau, also bevor der Bremszylinder montiert ist, problematisch ist, so dass die Gefahr einer Beschädigung der Dichtung bereits vor der Montage des Bremszylinders am Bremssattel besteht.

In der WO 98/26968 ist gleichfalls eine gattungsgemäße Scheibenbremse geoffenbart, siehe Oberbegriff des Anspruchs 1, die nach einem Vorschlag einen im Bremssattel integrierten Bremszylinder aufweist, während bei einer anderen Variante der Bremszylinder als separates Bauteil mit einem Bremssattel verbunden ist. Hierbei stützt sich die Rückstellfeder am Grund eines Deckels ab, durch den ein Zylinderstößel geführt ist.

Der Erfindung liegt die Aufgabe zugrunde, eine pneumatisch betätigbare Scheibenbremse bzw. einen Bremszylinder der gattungsgemäßen Art so weiterzuentwickeln, dass sie gewichts- und bauraumoptimiert sind und ihre Standzeit erhöht wird und der Bremszylinder einfacher und kostengünstiger anschließbar ist (Entlüftung der positionsbedingten Ausführungsvariante).

Diese Aufgabe wird durch eine Scheibenbremse mit den Merkmalen des Anspruchs 1 bzw. einen Bremszylinder mit den Merkmalen der Ansprüche 12 und 17 gelöst.

Nach Anspruch 1 bildet der Flansch mit einer dünnen - nicht allein als Widerlager wirkenden - Blechdeckelfolie dazwischen - ein Widerlager für die Rückstellfeder.

Damit kann die Anbindung des Bremszylinders am Bremssattel aufgrund der geringen Abmessungen und des geringen Gewichts gegenüber den bisherigen Ausführungen erheblich optimiert werden. Der Zylinder bildet auch eine vormontierte Einheit ohne Zylinderstößel.

Durch die nach Anspruch 2 vorgesehene Selbstverstärkungseinrichtung, die bislang bei elektromechanisch betätigbaren Scheibenbremsen zum Einsatz kommt, wird zudem der Leistungsbedarf des Bremszylinders reduziert, mit der Folge einer wesentlichen Bauraumverkleinerung, bei gleichbleibendem Betriebsverhalten der Bremse.

Bereits mit relativ geringen Selbstverstärkungsfaktoren ist eine erhebliche Reduzierung der Baugröße des Bremszylinders sowie eines Federspeichers möglich. Dabei wird die Selbstverstärkung durch eine entsprechende Dimensionierung von Keil- bzw. Rampenwinkeln so gewählt, dass sich auch bei einem maximal möglichen Reibbeiwert der Bremsbeläge noch ein sicher selbsttätiges Lösen der Bremse ergibt.

Anders als bei elektromotorischen Scheibenbremsen muss damit der Krafterzeuger zum Zuspannen der Bremse nicht auch zum Lösen genutzt werden.

Die Baumaßverkleinerung ist insbesondere durch den geringeren Hub möglich, der bei einem Verstärkungsverhältnis von z.B. 2,7 und einem angepassten Übersetzungsverhältnis der Bremse von bislang beispielsweise 65 mm auf 24 mm reduziert wird.

Dieser geringe Hub führt überdies dazu, dass der den Stößel umschließende Faltenbalg sehr kompakt gestaltet werden kann und im einfachsten Fall nur noch mit einer Falte ausgeführt ist, wobei der Faltenbalg mit einem stahlarmierten Dichtsitz direkt in die Durchgangsöffnung an der Schnittstelle des Bremszylinders mit dem Bremssattel eingesetzt wird und zwar in die Öffnung des Bremssattels, die vom Stößel durchtreten wird.

Prinzipiell kann der Stößel zweigeteilt sein, und zwar bestehend aus einem Zylinderstößel, der stirnseitig am Bremshebel anliegt, und einem Stößelteller, der eine etwa kalottenförmige Vertiefung aufweist, in die der Zylinderstößel mit seinem anderen Ende eingefügt ist. Der Stößelteller bildet mit einer Membrane den Membrankolben, der gebildete Bremszylinderkammern teilt und der im Bremsfall mit Druckluft beaufschlagt wird. Der Zylinder kann auch als reiner Membranzylinder ausgebildet sein, der keinen Federspeicherbremsabschnitt aufweist.

Die Anbindung des Bremszylinders am Bremssattel kann aufgrund der geringen Abmessungen und des geringen Gewichts gegenüber den bisherigen Ausführungen optimiert werden. So ist der Deckel, der den Bremszylinder auf seiner dem Flansch zugewandten Seite abdeckt, als dünnwandiges Blechformteil, nach Art einer weitgehend formstabilen Metallfolie ausgebildet, an dem die Rückstellfeder mit einem Ende anliegt, während sich das andere Ende am Stößelteller (Membranteller) abstützt.

Der Deckel liegt dabei in dem topfartig geformten Flansch des Bremssattels ein, wobei der Flansch ein Widerlager für die Rückstellfeder bildet, da die Blechdicke des Deckels so gering gewählt sein kann, dass eine verformungsfreie Anlage der Rückstellfeder am Deckel nicht möglich wäre.

Die Erfindung schafft auch den Gegenstand des Anspruchs 17, wonach die Rückstellfeder dazu ausgelegt ist, über einen dünnen folienartigen Deckel an einem Flansch der Scheibenbremse als Widerlager anzuliegen.

Die Dickenminimierung des Deckels führt ebenso zu einer Gewichtsreduzierung wie der Verzicht auf Befestigungsschrauben zur Festlegung des Bremszylinders am Bremssattel.

Stattdessen kann der Bremszylinder beispielsweise mittels eines Spannbandes am Bremssattel befestigt sein.

Hierzu ist zum einen der Deckel des Bremszylinders als sozusagen Einrollrand ausgebildet, mit dem der Membran-Zylinder am Bremszylinder-Gehäuse gehalten wird. Insoweit ist der Bremszylinder mit dem Bremszylinder-Gehäuse, dem Membranzylinder, dem Deckel, dem Stößelteller und der Rückstellfeder als Baueinheit vormontiert, während der Zylinderstößel und der Faltenbalg Bestandteil des vormontierten Bremssattels sind.

Bei einer Montage des Bremszylinders wird dieser lediglich auf den topfartigen Flansch des Bremssattels aufgesetzt, wobei sich der Zylinderstößel in der kalottenartigen Aufnahme des Stößeltellers praktisch selbsttätig zentriert.

Nachfolgend sei noch ein weiterer Vorteil der erfindungsgemäßen Scheibenbremse nach Anspruch 2 betrachtet:

Bei einer konventionellen Bremse gilt beispielhaft:

Das Verdrängungsvolumen Zylinderstößel im Faltenbalg bei einem Vollhub liegt bei einer bekannten Bremse bei 65 cm$^3$

Das Schluckvolumen des herausfahrenden Stößels ggf. mit Faltenbalg bei Hub 4,1 (i = 15,6) beträgt ca. 16,5 cm$^3$

Damit gilt für die Volumenänderung ∆V:

$$\Delta V = 65 - 16,5 = 48,5 \ \mathbf{cm^3}$$

Bei einer erfindungsgemäßen selbstverstärkenden Bremse gilt dagegen:

Das Verdrängungsvolumen des Zylinderstößels mit Faltenbalg beträgt bei einem Vollhub von 30 cm ca. 30,5 cm$^3$.

Das Schluckvolumen der drei ausfahrbaren Stößel mit Faltenbalg beträgt dagegen bei einem Hub von 4,16 cm (i = 7,2) ca. 25 cm$^3$

Damit gilt:

$$\Delta V = 30{,}5 - 25 = 5{,}5 \text{ cm}^3.$$

Die verbleibende Volumenveränderung ist unwesentlich und kann bei angepasster Dimensionierung der Faltenbälge vollständig beseitigt werden

Damit werden Probleme, die durch Unter- oder Überdruck hervorgerufen werden - wie eingangs beschrieben - weitestgehend vermieden.

Weitere vorteilhafte Ausbildungen der Erfindung sind in den Unteransprüchen gekennzeichnet.

Ein Ausführungsbeispiel der Erfindung wird nachfolgend anhand der beigefügten Zeichnungen beschrieben.

Es zeigen:

Figur 1             einen Teilausschnitt einer erfindungsgemäßen Scheibenbremse in einer geschnittenen Seitenansicht

Figuren 2 bis 4     die Scheibenbremse in unterschiedlichen Montagepositionen

Figur 5             eine teilweise geschnittene schematische Draufsicht auf einen Teilausschnitt der Scheibenbremse.

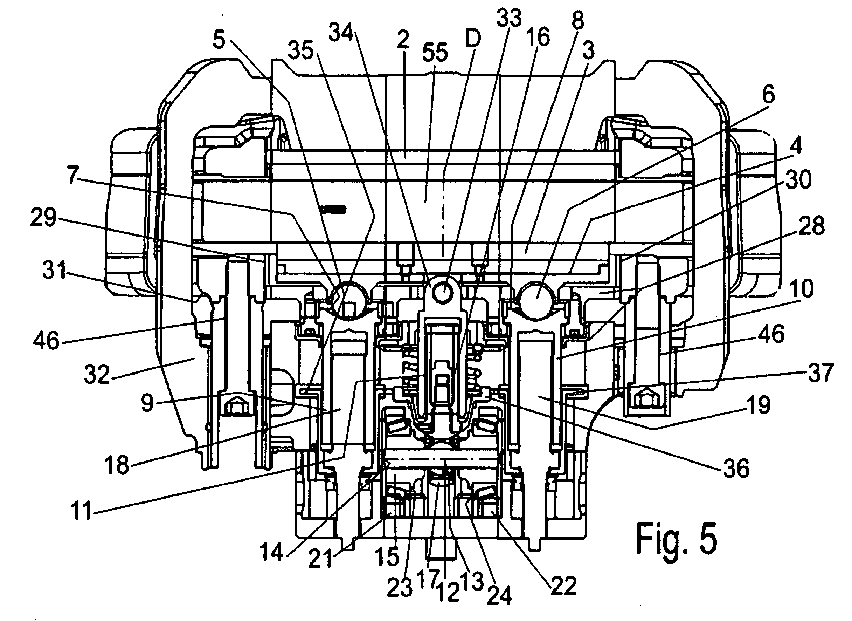

In der Figur 5 ist eine Schiebesattel-Scheibenbremse dargestellt, mit beidseits einer Bremsscheibe 55 angeordneten Bremsbelägen 2, 3.

Die Ausführung als Schiebesattel-Scheibenbremse ist eine mögliche Bauform.

Ausgestaltungen als Schwenksattel-Scheibenbremse oder als Festsattel-Scheibenbremse oder Mischformen der Bauarten sind denkbar, hier aber nicht dargestellt.

Die Schiebesattel-Scheibenbremse weist einen Bremssattel 32 auf, der eine Zuspannvorrichtung aufnimmt.

Der Bremssattel 32 ist mittels einer Sattelschiebeführung 46 an einem achsfesten Bremsträger 31 verschieblich geführt.

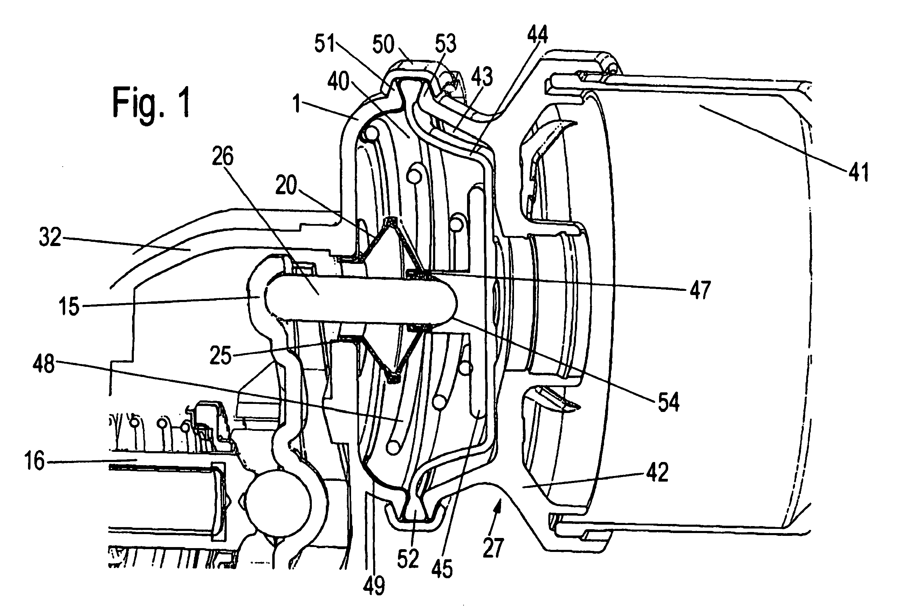

Ein in den Figuren 1 bis 4 gezeigter Bremszylinder 27 als Krafterzeuger, ist in Funktion an den Bremssattel 32 angesetzt und wirkt über einen Zylinderstößel 26 auf eine Zuspannvorrichtung mit einem vorzugsweise exzentrisch im Bremssattel 32 gelagerten Bremsdrehhebel 15, der durch einen Zylinderstößel 26 bei Betätigung der Bremse verschwenkbar ist.

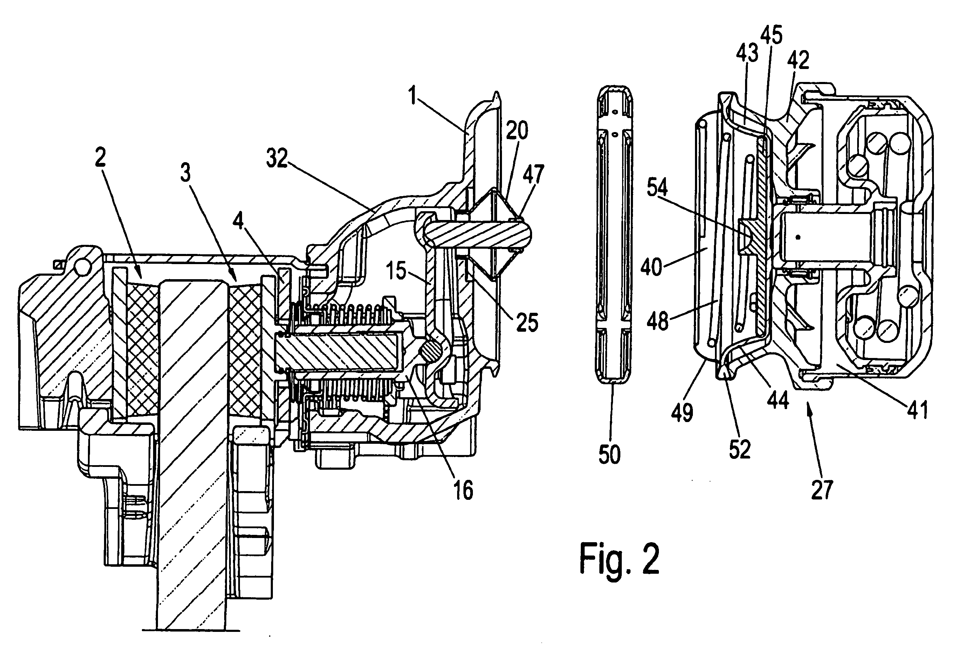

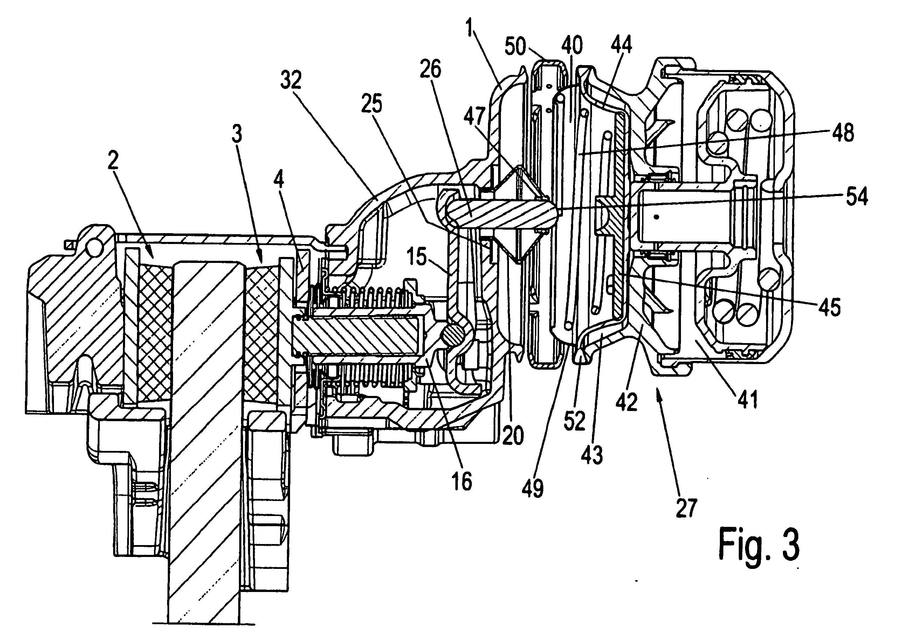

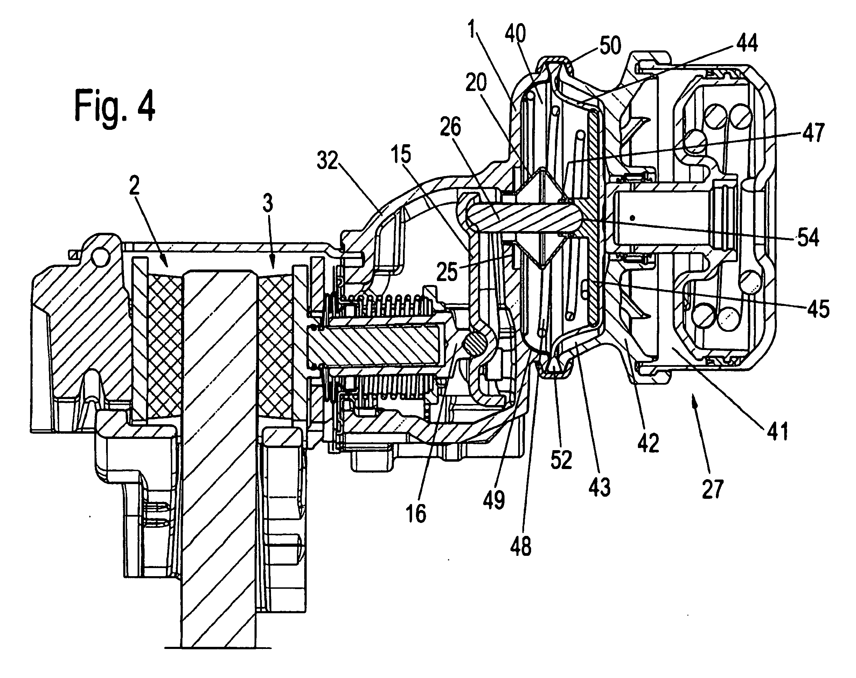

Die Figuren 2 und 3 zeigen die Scheibenbremse jeweils vor der Montage des Bremszylinders 27, während die Figuren 1 und 4 die montierte Stellung des Bremszylinders 27 am Bremssattel 1 wiedergeben.

In den Figuren 2 und 3 ist deutlich zu erkennen, dass der Bremszylinder eine separate Baueinheit bildet und in dem dem Bremssattel 1 zugeordneten Endbereich durch einen mit einer konzentrischen Öffnung versehenen Deckel 49 im Außenrandbereich verschlossen ist, wobei die Öffnung vorzugsweise von dem Betätigungs- bzw. Zylinderstößel 26 durchsetzbar ist.

Zur Verbindung ist an den Bremssattel 32 ist ein Flansch 1 angeformt, der topfartig ausgebildet ist und dabei eine innenseitig konkav geformte Wandung aufweist, die in einen radial nach außen gerichteten umlaufenden Kragen 51 übergeht.

Am Flansch 1 ist der Bremszylinder 27 befestigt, wozu ein Spannring 50 vorgesehen ist, der den Kragen 51 einerseits und einen Kragen 53 eines BremszylinderGehäuses 42 übergreift und gegeneinander verspannt.

Zwischen den beiden Kragen 51, 53 ist ein umlaufender Wulst 52 eingeklemmt, der an einen Membranzylinder 44 angeformt ist, der den Bremszylinder 27 unterteilt in einen Betriebsbremsabschnitt 40 und einen Raum 43, der mit Druckluft beaufschlagbar ist.

An der dem Flansch 1 zugewandten Stirnfläche des Membranzylinders 44 ist ein Stößelteller 45 befestigt, mit einer als Kalotte 54 ausgebildeten Ausnehmung, in die der Zylinderstößel 26 endseitig eingreift.

Der Zylinderstößel 26 wird durch eine Öffnung im Flansch 1 geführt, in der ein Dichtring 25 gehalten ist, zur Aufnahme eines Faltenbalgs 20, der andererseits mit einer Dichtung 47 am Zylinderstößel 26 anliegt, wobei die Dichtung 47 am Zylinderstößel 26 fixiert ist.

Der Faltenbalg, im Beispiel mit lediglich einer Falte, trennt den Betriebsbremsabschnitt 40 hermetisch vom Innern des Bremssattels 32.

Als vormontierte Bauteile sind der Bremssattel 32 mit dem Zylinderstößel 26 und dem Faltenbalg 20 bestückt, und der Bremszylinder 27 auf seiner dem Flansch 1 zugewandten Seite durch den Deckel 49 im Außenrandbereich abgedeckt.

Dieser Deckel 49 umschließt den Wulst 52 ebenso wie den Kragen 53 des Bremszylindergehäuses 42 und dient weiter als Auflager für eine Rückstellfeder 48, die sich andererseits am Stößelteller 45 abstützt.

Dabei ist der Deckel 49 in seiner Kontur an den Flansch 1 angepasst, d.h., er ist au-βenseitig konvex ausgebildet und liegt an der konkaven Wandung des Flansches 1 an.

Der Flansch 1 dient demzufolge als Widerlager für die Rückstellfeder 48, die in Nichtfunktionsstellung, also auch bei einem Transport des Bremszylinders 27 als vormontierte Baueinheit weitgehend entspannt ist.

Bei der genannten Verschwenkung des Bremsdrehhebels 15 im Falle einer Bremsung wirkt dieser über wenigstens einen Bremsstempel 11 direkt oder über eine Druckplatte 4 auf den zuspannseitigen Bremsbelag 3 (Figur 5).

Dabei sind der Bremsstempel 11 und der Bremsdrehhebel 15 sowie der Bremsstempel 11 und die Druckplatte 4 gelenkig miteinander derart verbunden, dass der Bremsstempel 11 beim Zuspannen der Scheibenbremse ganz oder zumindest im Wesentlichen einer Bewegung des zuspannseitigen Bremsbelages 3 in Umfangrichtung der Bremsscheibe 55 folgen kann, wobei die Zuspannvorrichtung derart ausgelegt ist, dass auf den Bremsbelag 3 Druckkräfte einwirken können.

Der zuspannseitige Bremsbelag 3 ist in der Druckplatte 4 angeordnet, die parallel zur Bremsscheibenreibfläche verschieblich ist und über in ihr gelagerte Rollkörper, in Form von Kugeln 5 und 6, mit keilartigen Rampen 7, 8 von axial längenveränderlichen Druckstempel 9, 10 in Wirkverbindung stehen, die in einem spitzen Winkel von mehr als 9 und weniger als 90° zur Bremsscheibenreibfläche ausgerichtet sind.

Die Rampen 7, 8 könnten ergänzend auch in der Druckplatte 4 ausgebildet sein. Die Kugeln 5, 6, oder andere geeignete Rollkörper, wären in diesem Fall in kalottenartigen Ausnehmungen der Druckstempel 9, 10 geführt, die dennoch Teil der Selbstverstärkungseinrichtung im Sinne des Anspruchs 1 wären.

An der Druckplatte 4 ist, wie bereits erwähnt, der Bremsstempel 11 zur Übertragung der in Richtung der Bremsscheibe 55 wirkenden Druck- und Zugkräfte angelenkt. Diese Anlenkung erfolgt hier mittels eines Bolzens 33 und mit einem Gabelkopf 34.

Diese gelenkige Verbindung erlaubt bei einer Umfangsverschiebung der Druckplatte 4 eine Schwenkbewegung des Bremsstempels 11 um den Kugelmittelpunkt 12 (der auf der Exzenterdrehachse liegt) eines Kalottenlagers 13.

Das Kalottenlager 13 ist auf der Exzenterachse 14 des Bremsdrehhebels 15 zur Übertragung der Betätigungskräfte auf den Bremsstempel 11 aufgenommen. Dieser ist mit einem Gewindestößel 16 verschraubt, wobei der Gewindestößel 16 wiederum fest mit einem Gelenklagergehäuse 17 verbunden ist.

Der Bremsstempel 11 bildet mit dem Gewindestößel 16 einen zum Zwecke der Verschleiß-Nachstellung längenveränderlichen Stößel bzw. Nachstellkolben.

In gleicher Weise sind die beiden Druckstempel 9, 10 mit den Gewindespindeln 18, 19, die die Abstützkraft der Druckstempel 9, 10 auf den Bremssattel 32 übertragen, verschraubt.

Die Gewindespindeln 18, 19 sind mit dem Gewindestößel 16 durch ein Synchronisationsgetriebe verbunden. Hierdurch wird erreicht, dass die Antriebs-Drehbewegung des Nachstellerantriebs nur synchron auf die beiden Druckstempel 9, 10 sowie den Bremsstempel 11 einwirkt.

Der Bremsdrehhebel 15 ist in zwei Lagerböcken 21, 22 mittels zweier Wälzlager 23, 24 reibungsarm gelagert, wobei die Lagerböcke 21, 22 mit dem Bremssattel 32 fest verbunden sind.

Die Druckstempel 9, 10 sind an ihrem der Bremsscheibe 55 zugewandten Ende in einer Führungsplatte 28 derart aufgenommen bzw. ausgestaltet, dass auf die Rampen 7, 8 parallel zur Bremsscheibenreibfläche wirkende Abstützkräfte in die Führungsplatte 28 eingeleitet und von dieser, je nach Drehrichtung der Bremsscheibe 55, an den Führungsflächen 29 oder 30 auf den Bremsträger 31 abgeleitet werden.

Die Führung der Druckstempel 9, 10 und des Bremsstempels 11 erfolgt an deren zur Bremsscheibe 55 gewandten Ende ausschließlich über die Führungsplatte 28 und den Bremsträger 31.

Der Bremssattel 32 und das Nachstelleinrichtungsgetriebe 35, 36, 37 sowie die Sattelschiebeführung sind von den Umfangskräften entlastet. Dabei sind die Bremsstempel 9, 10 vorzugsweise einfach direkt an der Führungsplatte 28 verschraubt oder verpresst.

Nachfolgend sei beispielhaft eine Bremsung mit dieser Scheibenbremse beschrieben:

Beim Erkennen eines Bremswunsches über die Betätigung des Bremspedals und damit des mit dem Bremspedal verbundenen Brems-Sollwertgebers wird der Bremszylinder 27 mit Druckluft beaufschlagt, so dass sich unter Auslenkung der Membrane 44 der Zylinderstößel 26 bewegt.

Der Bremsdrehhebel 15 wird dabei in seinen Wälzlagern 23, 24 verschwenkt und bewegt damit auch seine Exzenterwelle 14 und damit das Kalottenlager 13, entsprechend der Hebelübersetzung in Richtung der Bremsscheibe 55. Die Bewegung des Kalottenlagers 13 wird über den Bremsstempel 11 bzw. über die Bauteilkette 12 => 13 => 17 => 16 => 11 => 33 => 34 auf die Druckplatte 4 übertragen.

Die Druckplatte 4 wird dabei zunächst zur Überwindung der Lüftspiels mit dem Bremsbelag 3 rechtwinklig zu deren Reibfläche auf die Bremsscheibe 55 zu bewegt. Bei Anlegen des Bremsbelages 3 an die Reibfläche der Bremsscheibe 55 werden der Bremsbelag 3 und die damit verbundene Druckplatte 4 durch die entstehende Reibkraft von der Bremsscheibe 55 in deren Drehrichtung mitbewegt.

Die Kugeln 5, 6 werden an den Rampen 7, 8 entlang geführt und bewirken dabei auf die Druckplatte 4 zusätzlich zu deren Umfangsbewegung als Selbstverstärkungseinrichtung eine verstärkte Bewegung auf die Bremsscheibe 55 zu.

Die vom Bremsstempel 11 eingeleitete Anlegekraft wird dabei entsprechend der erhöhten Aufspreizung des Bremssattels 32 verstärkt. Infolge der Umfangsverschiebung der Druckplatte 4 führt der Bremsstempel 11 eine Schwenkbewegung um das Kalottenlager 13 und den Bolzen 33 aus.

Der reaktionsseitige Bremsbelag 2 wird wie bei Schiebesattelbremsen üblich infolge einer Verschiebung des Bremssattels an die Bremsscheibe 55 gelegt. Hier muss keine Selbstverstärkungseinrichtung vorgesehen sein.

Der Bremszylinder 27 ist hier als Kombizylinder ausgebildet mit dem Betriebsbremsabschnitt 40 und einem Feststellbremsabschnitt 41.

Bezugszeichenliste

| | |
|---|---|
| Flansch | 1 |
| Bremsbeläge | 2, 3 |
| Druckplatte | 4 |
| Kugeln | 5 und 6 |
| Rampen | 7 und 8 |
| Druckstempel | 9 und 10 |
| Bremsstempel | 11 |
| Kugelmittelpunkt | 12 |
| Kalottenlager | 13 |
| Exzenterachse | 14 |
| Bremsdrehhebel | 15 |
| Gewindestößel | 16 |
| Gelenklagergehäuse | 17 |
| Gewindespindeln | 18 und 19 |
| Faltenbalg | 20 |
| Lagerböcke | 21/22 |
| Wälzlager | 23/24 |
| Dichtring | 25 |
| Zylinderstößel | 26 |
| Bremszylinder | 27 |
| Führungsplatte | 28 |
| Führungsflächen | 29 oder 30 |

| | |
|---|---|
| Bremsträger | 31 |
| Bremssattel | 32 |
| Bolzen | 33 |
| Gabelkopf | 34 |
| Nachstellgetriebe | 35/36/37 |
| Betriebsbremsabschnitt | 40 |
| Feststellbremsabschnitt | 41 |
| Bremszylindergehäuse | 42 |
| Raum | 43 |
| Membranzylinder | 44 |
| Teller | 45 |
| Sattelschiebeführung | 46 |
| Dichtung | 47 |
| Rückstellfeder | 48 |
| Deckel | 49 |
| Spannring | 50 |
| Kragen | 51 |
| Wulst | 52 |
| Kragen | 53 |
| Kalotte | 54 |
| Bremsscheibe | 55 |

**Patentansprüche**

1. Pneumatisch betätigbare Scheibenbremse, mit

A) einem eine Bremsscheibe (55) übergreifenden Bremssattel (32),
B) beidseitig an die Bremsscheibe (55) anlegbaren Bremsbelägen (2, 3), von denen ein zuspannseitiger Bremsbelag (3) mittels einer Zuspannvorrichtung, vorzugsweise mit einem Bremsdrehhebel (15) der Zuspannvorrichtung, betätigbar ist,
C) wobei an einem Flansch (1) des Bremssattels (32) ein mit Druckluft beaufschlagbarer Bremszylinder (27) befestigt ist,
D) der über einen Zylinderstößel (26) an dem Bremsdrehhebel (15) angreift und der eine Rückstellfeder (48) aufweist, mit der der Zylinderstößel (26) in eine unbelastete Ausgangsstellung zurückholbar ist und die am Grund eines sich am Flansch (1) abstützenden, vom Zylinderstößel (26) durchsetzten Deckels (49) anliegt,
**dadurch gekennzeichnet, dass**
E) der aus dünnwandigem Blech nach Art einer formstabilen Metallfolie bestehende Deckel (49) an dem ein Widerlager für die Rückstellfeder (48) bildenden Flansch (1) anliegt.

2. Pneumatisch betätigbare Scheibenbremse nach Anspruch 1, **dadurch gekennzeichnet, dass** eine Selbstverstärkungseinrichtung vorgesehen ist, die insbesondere einen Selbstverstärkungsfaktor aufweist, der derart gewählt ist, dass sich die Bremse nach Bremsungen selbsttätig löst.

3. Pneumatisch betätigbare Scheibenbremse nach Anspruch 1 oder 2, **dadurch gekennzeichnet, dass** der Flansch (1) topfartig ausgebildet ist und eine auf ihrer Innenseite konkav geformte Seitenwand aufweist, an der der daran angepasste Deckel (49) anliegt.

4. Pneumatisch betätigbare Scheibenbremse nach einem der vorhergehenden Ansprüche, **dadurch gekennzeichnet, dass** der Deckel (49) einen umlaufenden Rand eines Membran-Zylinders (44) klemmend an einem Bremszylindergehäuse (42) hält.

5. Pneumatisch betätigbare Scheibenbremse nach Anspruch 4, **dadurch gekennzeichnet, dass** der Rand des Membranzylinders (44) als Wulst (52) ausgebildet ist.

6. Pneumatisch betätigbare Scheibenbremse nach Anspruch 5, **dadurch gekennzeichnet, dass** der Deckel (49) den Wulst (52) an einem Kragen (53) des Bremszylindergehäuses (42) hält, wobei der Deckel (49) den Wulst (52) und den Kragen (53) übergreift.

7. Pneumatisch betätigbare Scheibenbremse nach einem der vorhergehenden Ansprüche, **dadurch gekennzeichnet, dass** ein den Zylinderstößel (26) teilweise überdeckender Faltenbalg (20) einerseits dichtend an einer Öffnung des Flansches (1) und andererseits dichtend am Zylinderstößel (26) anliegt.

8. Pneumatisch betätigbare Scheibenbremse nach einem der vorhergehenden Ansprüche, **dadurch gekennzeichnet, dass** der Zylinderstößel (26) mit seinem dem Bremsdrehhebel (15) abgewandten Ende in einem Stößelteller (45) einliegt, der an der dem Flansch (1) zugewandten Unterseite des Membranzylinders (44) befestigt ist.

9. Pneumatisch betätigbare Scheibenbremse nach Anspruch 8, **dadurch gekennzeichnet, dass** das ballig ausgeformte Ende des Zylinderstößels (26) in einer Kalotte (54) des Stößeltellers (45) einliegt.

10. Pneumatisch betätigbare Scheibenbremse nach Anspruch 6, **dadurch gekennzeichnet, dass** der Flansch (1) einen umlaufenden, sich radial nach außen erstreckenden Kragen (51) aufweist, an dem der Deckel (49) bereichsweise anliegt, wobei zur Verbindung des Bremszylinders (27) und des Flansches (1) ein Spannring (50) vorgesehen ist, der den Kragen (51), den Deckel (49), den Wulst (52) des Membranzylinders (44) und den Kragen (53) des Bremszylindergehäuses (42) gegeneinander verspannt.

11. Pneumatisch betätigbare Scheibenbremse nach einem der vorhergehenden Ansprüche, **dadurch gekennzeichnet, dass** zumindest der zuspannseitige Bremsbelag (3) sowohl in Richtung parallel zur Bremsscheibendrehachse D als auch parallel zur Bremsscheibenreibfläche beweglich ist.

12. Mit Druckluft beaufschlagbarer Bremszylinder, insbesondere für eine Scheibenbremse nach einem oder mehreren der vorstehenden Ansprüche, mit einem Bremszylindergehäuse (42) und einer darin angeordneten Rückstellfeder (48), die am Grund eines Deckels (49) anliegt, **dadurch gekennzeichnet, dass** der Deckel (49) aus dünnwandigem Blech nach Art einer weitgehend formstabilen Metallfolie besteht und dass er eine vormontierte Einheit ohne Zylinderstößel bildet.

13. Bremszylinder nach Anspruch 12, **dadurch gekennzeichnet, dass** der Deckel (49) eine vorzugsweise konzentrische Öffnung aufweist.

14. Bremszylinder nach Anspruch 12 oder 13, **dadurch gekennzeichnet, dass** der Deckel (49) einen umlaufenden Rand eines Membranzylinders (44) klemmend an dem Bremszylindergehäuse (42) hält.

15. Bremszylinder nach Anspruch 14, **dadurch gekennzeichnet, dass** der Rand des Membranzylinders (44) als Wulst (52) ausgebildet ist.

16. Bremszylinder nach Anspruch 15, **dadurch gekennzeichnet, dass** der Deckel (49) den Wulst (52) an einem Kragen (53) des Bremszylindergehäuses (42) hält, wobei der Deckel (49) den Wulst (52) und den Kragen (53) übergreift.

**17.** Bremszylinder nach Anspruch 12, **dadurch gekennzeichnet, dass** die Rückstellfeder (48) dazu auslegt ist, über den dünnen folienartigen Deckel an einem Flansch der Scheibenbremse als Widerlager anzuliegen.

**Claims**

**1.** A pneumatically actuatable disc brake, with

A) a brake calliper (32) straddling a brake disc (55),
B) brake linings (2, 3) which can be applied against the brake disc (55) on both sides, of which a brake lining (3) on the brake application side can be actuated by means of a brake application device, preferably with a rotary brake lever (15) of the brake application device,
C) with a brake cylinder (27) which can be acted upon by compressed air being fastened on a flange (1) of the brake calliper (32),
D) which cylinder acts via a cylinder tappet (26) on the rotary brake lever (15) and which has a restoring spring (48) with which the cylinder tappet (26) can be brought back into a non-loaded starting position and which lies against the base of a cover (49) which is supported on the flange (1) and penetrated by the cylinder tappet (26),
**characterised in that**
E) the cover (49), which consists of thin-walled sheet metal in the manner of a dimensionally stable metal foil, lies against the flange (1) forming an abutment for the restoring spring (48).

**2.** A pneumatically actuatable disc brake according to Claim 1, **characterised in that** a self-energising means is provided which in particular has a specific brake factor which is selected such that the brake automatically releases after braking operations.

**3.** A pneumatically actuatable disc brake according to Claim 1 or 2, **characterised in that** the flange (1) is formed in a pot shape and has a side wall which is formed concave on its inner side, against which wall the cover (49) which is adapted thereto lies.

**4.** A pneumatically actuatable disc brake according to one of the preceding claims, **characterised in that** the cover (49) holds a circumambient edge of a membrane cylinder (44) in clamping manner against a brake-cylinder housing (42).

**5.** A pneumatically actuatable disc brake according to Claim 4, **characterised in that** the edge of the membrane cylinder (44) is formed as a bead (52).

**6.** A pneumatically actuatable disc brake according to Claim 5, **characterised in that** the cover (49) holds the bead (52) against a collar (53) of the brake-cylinder housing (42), the cover (49) straddling the bead (52) and the collar (53).

**7.** A pneumatically actuatable disc brake according to one of the preceding claims, **characterised in that** a bellows (20) which partially covers the cylinder tappet (26) lies on one side in sealing manner against an opening of the flange (1) and on the other side in sealing manner against the cylinder tappet (26).

**8.** A pneumatically actuatable disc brake according to one of the preceding claims, **characterised in that** the cylinder tappet (26) with its end remote from the rotary brake lever (15) lies in a tappet head (45) which is fastened to the underside, facing the flange (1), of the membrane cylinder (44).

**9.** A pneumatically actuatable disc brake according to Claim 8, **characterised in that** the convex shaped end of the cylinder tappet (26) lies in a spherical cup (54) of the tappet head (45).

**10.** A pneumatically actuatable disc brake according to Claim 6, **characterised in that** the flange (1) has a circumambient collar (51) extending radially outwards, against which collar the cover (49) lies in regions, with a clamping ring (50) being provided for connecting the brake cylinder (27) and the flange (1), which ring braces the collar (51), the cover (49), the bead (52) of the membrane cylinder (44) and the collar (53) of the brake-cylinder housing (42) against each other.

11. A pneumatically actuatable disc brake according to one of the preceding claims, **characterised in that** at least the brake lining (3) on the brake application side is movable both in the direction parallel to the axis of rotation of the brake disc D and parallel to the brake-disc friction surface.

12. A brake cylinder which can be acted upon by compressed air, in particular for a disc brake according to one or more of the above claims, with a brake-cylinder housing (42) and a restoring spring (48) arranged therein which lies against the base of a cover (49), **characterised in that** the cover (49) consists of thin-walled sheet metal in the manner of a largely dimensionally stable metal foil, and **in that** it forms a premounted unit without cylinder tappet.

13. A brake cylinder according to Claim 12, **characterised in that** the cover (49) has a preferably concentric opening.

14. A brake cylinder according to Claim 12 or 13, **characterised in that** the cover (49) holds a circumambient edge of a membrane cylinder (44) in clamping manner against the brake-cylinder housing (42).

15. A brake cylinder according to Claim 14, **characterised in that** the edge of the membrane cylinder (44) is formed as a bead (52).

16. A brake cylinder according to Claim 15, **characterised in that** the cover (49) holds the bead (52) against a collar (53) of the brake-cylinder housing (42), the cover (49) straddling the bead (52) and the collar (53).

17. A brake cylinder according to Claim 12, **characterised in that** the restoring spring (48) is designed to lie, via the thin foil-like cover, against a flange of the disc brake as abutment.

**Revendications**

1. Frein à disque à commande pneumatique, comprenant

   (A) un étrier de frein (32) chevauchant un disque de frein (55),
   (B) des garnitures de frein (2, 3) à appliquer contre ledit disque de frein (55) des deux côtés, dont une garniture de frein (3) du côté de serrage est commandable au moyen d'un dispositif de serrage de frein, de préférence à un levier rotatif de frein (15) dudit dispositif de serrage de frein,
   (C) dans lequel un cylindre de frein (27) est fixé à une bride (1) dudit étrier de frein (32), qui peut être exposé à l'action de l'air comprimé,
   (D) lequel cylindre se trouve en prise via une tige-poussoir (26) audit levier rotatif de frein (15) et comprend un ressort de rappel (48) au moyen duquel on peut rappeler ladite tige-poussoir (26) en une position de départ non chargé, audit ressort portant contre le fond d'un couvercle (49) s'appuyant à ladite bride (1), qui est traversé par ladite tige-poussoir(26),
   **caractérisé en ce que**
   (E) ledit couvercle (49) est fait en une tôle à paroi mince du type d'une feuille métallique indéformable porte contre ladite bride (1) qui constitue une butée pour ledit ressort de rappel (48).

2. Disque de frein à commande pneumatique selon la revendication 1, **caractérisé en ce qu'**un moyen auto renforçateur est disposé, qui présente, en particulier, un facteur d'auto renforcement, qui est choisi à un tel niveau, que le frein se desserre automatiquement après des opérations de serrage de frein.

3. Disque de frein à commande pneumatique selon la revendication 1 ou 2, **caractérisé en ce que** ladite bride (1) a une configuration en pot et comprend une paroi latérale en forme concave de son côté intérieur, contre laquelle porte ledit couvercle (49) adapté à ladite paroi.

4. Disque de frein à commande pneumatique selon une quelconque des revendications précédentes, **caractérisé en ce que** ledit couvercle (49) maintient un bord d'un cylindre à diaphragme (44) par serrage à un cartier du cylindre de frein (42).

5. Disque de frein à commande pneumatique selon la revendication 4, **caractérisé en ce que** ledit bord dudit cylindre à diaphragme (44) est configuré sous forme d'un bourrelet (52).

6. Disque de frein à commande pneumatique selon la revendication 5, **caractérisé en ce que** ledit couvercle (49) maintient ledit bourrelet (52) à un collet (53) dudit carter de cylindre de frein (42), audit couvercle (49) chevauchant ledit bourrelet (52) et ledit collet (53).

7. Disque de frein à commande pneumatique selon une quelconque des revendications précédentes, **caractérisé en ce qu'**un soufflet (20) chevauchant, en partie, ladite tige-poussoir (26) porte, d'un côté, contre une ouverture de ladite bride (1) de façon étanche, et, d'autre côté, de façon étanche, contre ladite tige-poussoir (26).

8. Disque de frein à commande pneumatique selon une quelconque des revendications précédentes, **caractérisé en ce que** ladite tige-poussoir (26) se trouve en prise, par son extrémité opposée audit levier rotatif de frein (15), dans un disque de poussoir (45), qui est fixé, par la face inférieure dudit cylindre à diaphragme (44), qui se trouve en face de ladite bride (1).

9. Disque de frein à commande pneumatique selon la revendication 8, **caractérisé en ce que** l'extrémité à configuration bombée de ladite tige-poussoir (26) se trouve en prise dans une calotte (54) dudit disque de poussoir (45).

10. Disque de frein à commande pneumatique selon la revendication 6, **caractérisé en ce que** ladite bride (1) présente un collet périphérique (51), qui s'étend radialement vers l'extérieur, auquel ledit couvercle (49) porte en certaines zones, à une bague de serrage (50) étant disposé pour le raccord dudit cylindre de frein (27) et de ladite bride (1), laquelle bague serre ledit collet (51), ledit couvercle (49), ledit bourrelet (52) dudit cylindre à diaphragme (44) et ledit collet (53) dudit carter de cylindre de frein (42) l'un contre l'autre

11. Disque de frein à commande pneumatique selon une quelconque des revendications précédentes, **caractérisé en ce qu'**au moins ladite garniture de frein (3) du côté de serrage est mobile en sens parallèle à l'axe de rotation D du disque de frein ainsi qu'en sens parallèle à l'aire de frottement du disque de frein.

12. Cylindre de frein à commander moyennant de l'air comprimé, en particulier pour un frein à disque selon une ou plusieurs quelconques des revendications précédentes, à un carter de cylindre de frein (42) et un ressort de rappel (48) y disposé à l'intérieur, qui porte contre le fond d'un couvercle (49), **caractérisé en ce que** ledit couvercle (49) est fait en un tôle à paroi mince du type d'une feuille métallique largement indéformable et qu'il constitue une unité pré-assemblée sans tige-poussoir.

13. Cylindre de frein selon la revendication 12, **caractérisé en ce que** ledit couvercle (49) comprend une ouverture concentrique de préférence.

14. Cylindre de frein selon la revendication 12 ou 13, **caractérisé en ce que** ledit couvercle (49) maintient un bord périphérique d'un cylindre à diaphragme (44) par serrage audit carter de cylindre de frein (42).

15. Cylindre de frein selon la revendication 14, **caractérisé en ce que** ledit bord dudit cylindre à diaphragme (44) est formé en bourrelet (52).

16. Cylindre de frein selon la revendication 15, **caractérisé en ce que** ledit couvercle (49) maintient ledit bourrelet (52) à un collet (53) dudit carter de cylindre de frein (42), audit couvercle (49) chevauchant ledit bourrelet (52) et ledit collet (53).

17. Cylindre de frein selon la revendication 12, **caractérisé en ce que** ledit ressort de rappel (48) est conçu de façon, qu'il porte via ledit couvercle mince en feuille contre une bride du frein à disque en tant que butée.

Fig. 1

Fig. 2

EP 2 297 477 B1

Fig. 3

14

Fig. 4

Fig. 5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0743469 B1
- WO 9826968 A